Europäisches Patentamt

European Patent Office

Office européen des brevets

(11) Publication number: **0 418 050 A1**

# EUROPEAN PATENT APPLICATION

(21) Application number: 90309972.9

(22) Date of filing: 12.09.90

(51) Int. Cl.⁵: **A47J 29/02**

(30) Priority: 13.09.89 MY 8901245

(43) Date of publication of application:
20.03.91 Bulletin 91/12

(84) Designated Contracting States:
AT BE CH DE DK ES FR GB GR IT LI LU NL SE

(71) Applicant: Hew, Ah Kow
Lot. 2.25, 1st floor, Wisma Central
Jalan Ampang, 50450 Kuala Lampur(MY)

Applicant: Yap, Kon Hin
Lot. 2.25, 1st floor, Wisma Central
Jalan Ampang, 50450 Kuala Lampur(MY)

(72) Inventor: Hew, Ah Kow
Lot 2.25, 1st Floor, Wisma Central
Jalan Ampang, 50450 Kuala Lumpur(MY)

(74) Representative: Newby, Martin John et al
J.Y. & G.W. Johnson Furnival House 14-18
High Holborn
London WC1V 6DE(GB)

(54) **Egg boiling apparatus and method.**

(57) Egg boiling apparatus comprises a container (10) for eggs to be boiled and heated water, the container having at least one water outlet hole (12), and a regulator (20) for controlling the output of water from said water outlet hole (12)

FIGURE B

## EGG BOILING APPARATUS AND METHOD

This invention relates to egg boiling apparatus. In particular the apparatus is intended to prevent boiled eggs from being under or over cooked, thus preserving their flavour and nutritional value. The invention also relates to a method of boiling eggs.

Conventionally boiled eggs may be prepared by placing uncooked eggs in a container and introducing boiling water into the container. Several factors influence the cooking of the eggs to a half-boiled or hard-boiled condition. Some of these factors are the number of eggs in the container, the amount of boiling water introduced into the container and the period of time that the eggs are immersed in the container.

It is known in the prior art to provide an egg boiling container with a restricted water outlet hole in its base. Eggs are placed in the container which is then filled to a desired level with boiling water. At least three levels are indicated: one level for. two eggs, another level for three eggs and yet another level for four eggs. After the water has been introduced into the container it drips through the water outlet hole into a receiver placed beneath the container. The restricted water outlet hole is so dimensioned that, when all of the water has dripped through it, the eggs are ready to serve as half boiled eggs. In this known prior art apparatus, however, there is no provision either to stop the water from dripping through the water outlet hole, e.g. so that the eggs can be hard boiled within the container, or to otherwise control or regulate the rate at which the water passes through the water outlet hole.

One aim of the present invention is to provide an option for the user of egg boiling apparatus to prepare either half boiled or hard boiled eggs.

Another aim of the invention is to provide cheap, easy to operate and durable egg boiling apparatus.

Another aim of the invention is to control the cooking of boiled eggs in dependence on the number of eggs to be cooked.

According to one aspect of the present invention there is provided an egg boiling apparatus as set out in the ensuing claim 1.

Conveniently the regulator is located beneath the centre of the base of the said container, suitably being interposed between the bottom outlet means, i.e. a water exit hole, and a regulator holding device.

According to another aspect of the present invention there is provided a method of boiling at least one egg as set out in the ensuing claim 12.

Embodiments of the invention will now be described, by way of example, with reference to the accompanying drawings, in which:

Figure 1 is a front view of an egg container of one embodiment of egg boiling apparatus according to the invention,

Figure 2 is a front view of the egg container shown in Figure 1 and a regulator holding device separated therefrom,

Figure 3 is a side view of the egg container, the regulator holding device shown in Figure 2 and a regulator, all being separated from each other,

Figure 4 is a cross-sectional view of the apparatus shown in Figure 3,

Figure 5 is a cross-sectional view of the various component shown in Figures 3 and 4 when assembled together and a receiver container,

Figure 6 is a cross section taken on the line C-C of Figure 5 but without the regulator installed and showing the apparatus positioned on the receiver container,

Figure 7 is a cross-sectional view similar to that shown in Figure 6 but taken in a vertical plane at right angles thereto,

Figure 8 is a cross-sectional view similar to Figure 6 but with the regulator installed,

Figures 9A-9C are different side views of the regulator shown in Figure 8 but turned through 0°, 90° and 180°, respectively, and Figures 9D and 9E are cross-sectional views taken, respectively, on lines A-A and B-B of Figures 9A and 9B,

Figure 10 is a plan of the base of a container having two water outlet holes and being part of apparatus according to a second embodiment of the invention,

Figure 11 is a side view of a regulator for use with the container shown in Figure 10 and having two sets of holes, and

Figures 11A, and 11B are cross-sectional views of the regulator shown in Figure 11 and taken on the lines CC and D-D, respectively, thereof.

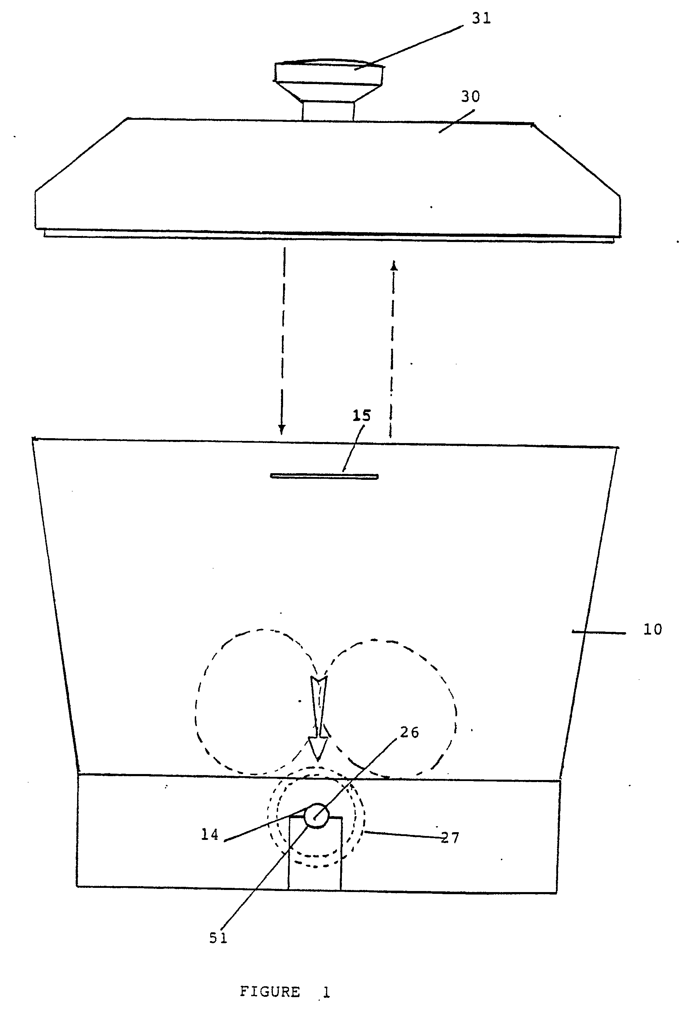

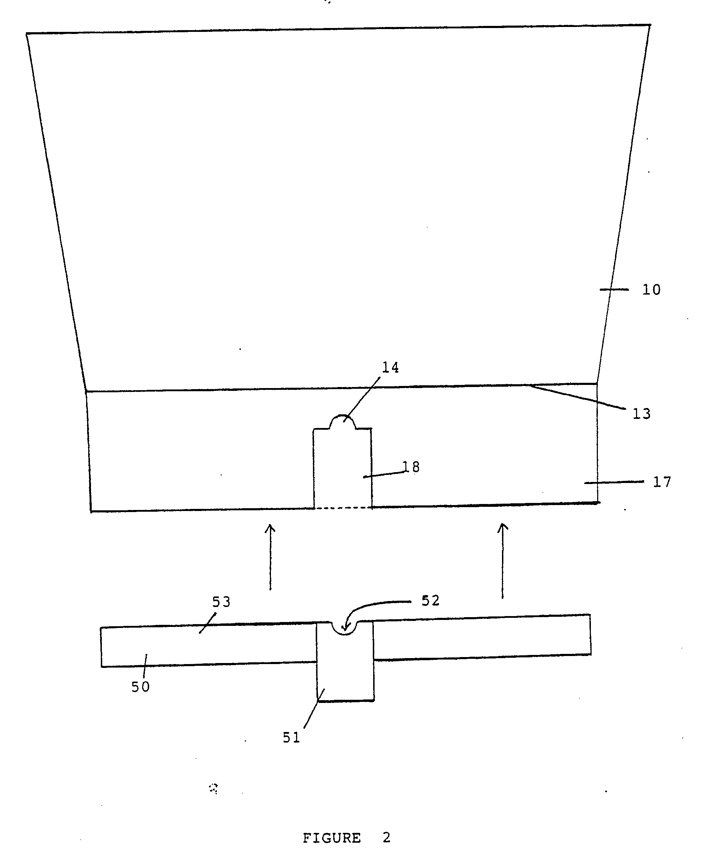

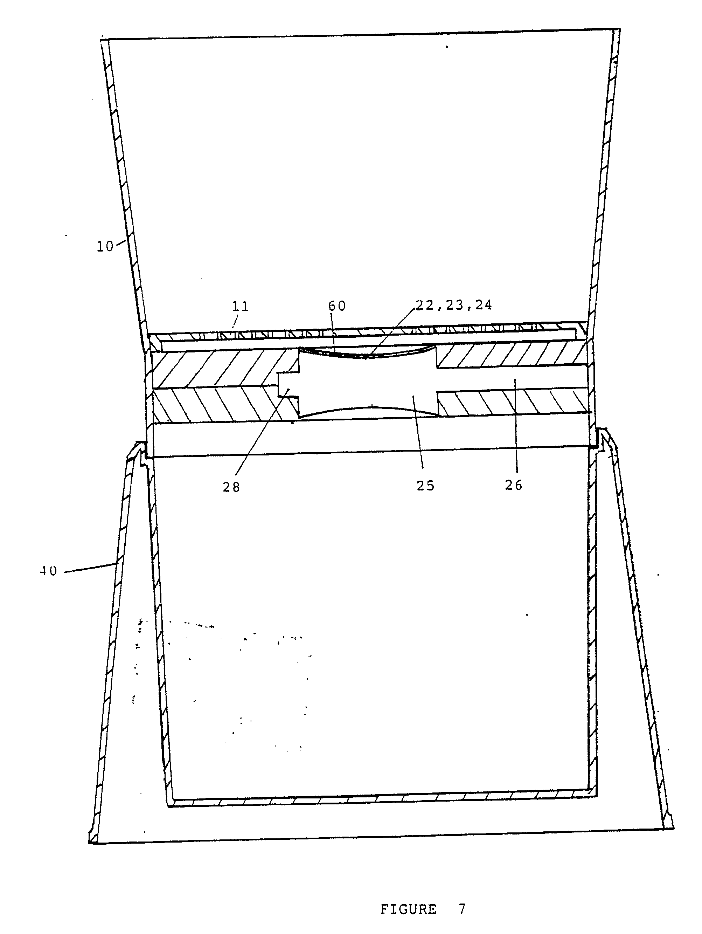

Figure 1 to 8 show various parts of a first embodiment of an egg boiling apparatus according to the invention and comprising an egg container 10, a regulator 20 and a regulator holder 50. The egg container 10 has a base 13 in which is provided a water outlet hole 12. The container 10 has a lid 30, provided with a lifting knob 31, for containing and preserving the heat of boiling water which is to be poured into and contained within the container. The level to which the container should be filled with boiling water for cooking eggs is indicated by a water level mark 15 marked on the side wall of the container 10.

The regulator 20 comprises a valve body 25 of varying circular cross-section which is of generally waisted form and has a diameter which increases towards its opposite axial ends. A stub shaft 28 and spindle 26 project axially from opposite ends of the valve body 25 and the end of the spindle 26 remote from the valve body is provided with a turning knob 27. The regulator 25 is rotatably mounted beneath the base 13 and is held in position by the holder 50. To achieve this, the container 10 has a bottom collar or rim 17 in which a circular plate 53 of the holder 50 is upwardly received. The facing surfaces of the base 13 and plate 53 are recessed at 16 and 54, 55 and 56, respectively, to rotatably receive the valve body 25, stub shaft 28 and spindle 26 of the regulator. The end of the spindle 26 which carries the knob 27 projects through a downwardly open opening 18 in the rim 17 and is received in a semi-circular recess 14 at the "bottom" of the opening 18 and a semi-circular recess 52 in a recessed vertical bracket 51 attached to the plate 53 of the regulator holder 50. The diameter of the circular regulator plate 53 is such as to provide an interference fit within the bottom collar or rim 17 of the egg container 10. When assembled, the two recesses 14 and 52 form a "window" hole through which the spindle 26 projects.

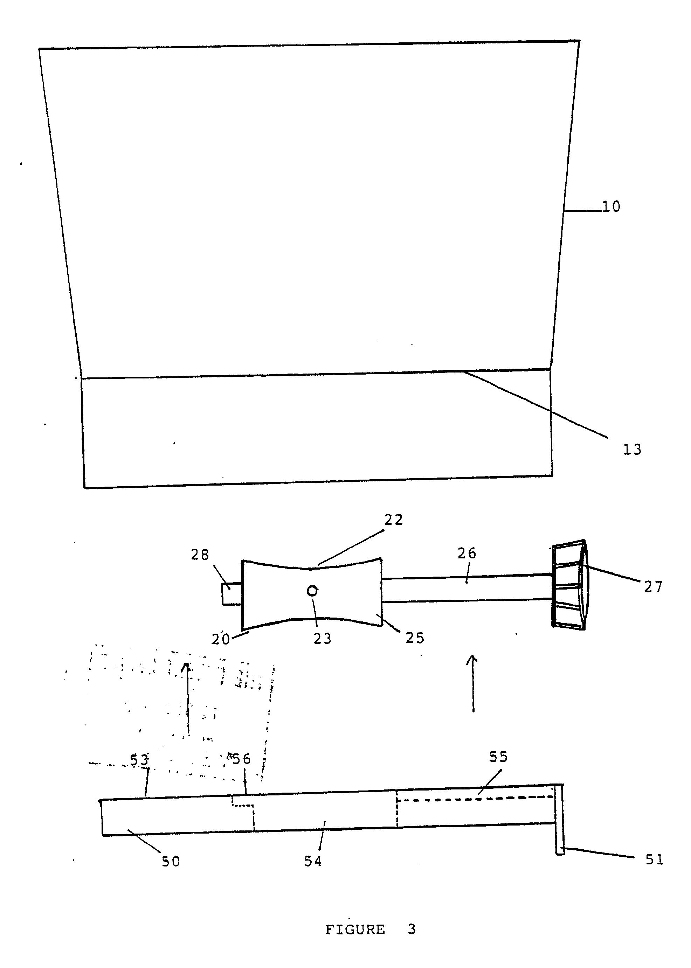

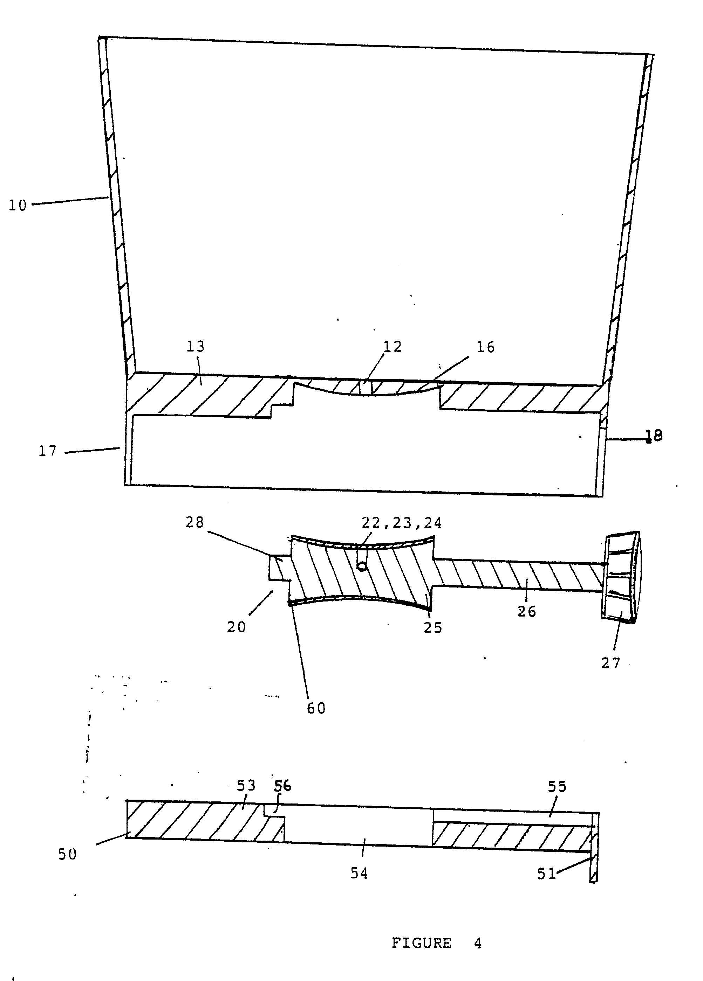

The recesses in the plate 53 comprise a longitudinal cavity 54 (see Figures 3 and 4) with a short semi-cylindrical cavity 56 for receiving the stub shaft and a semi-cylindrical trough 55 for receiving the spindle 26.

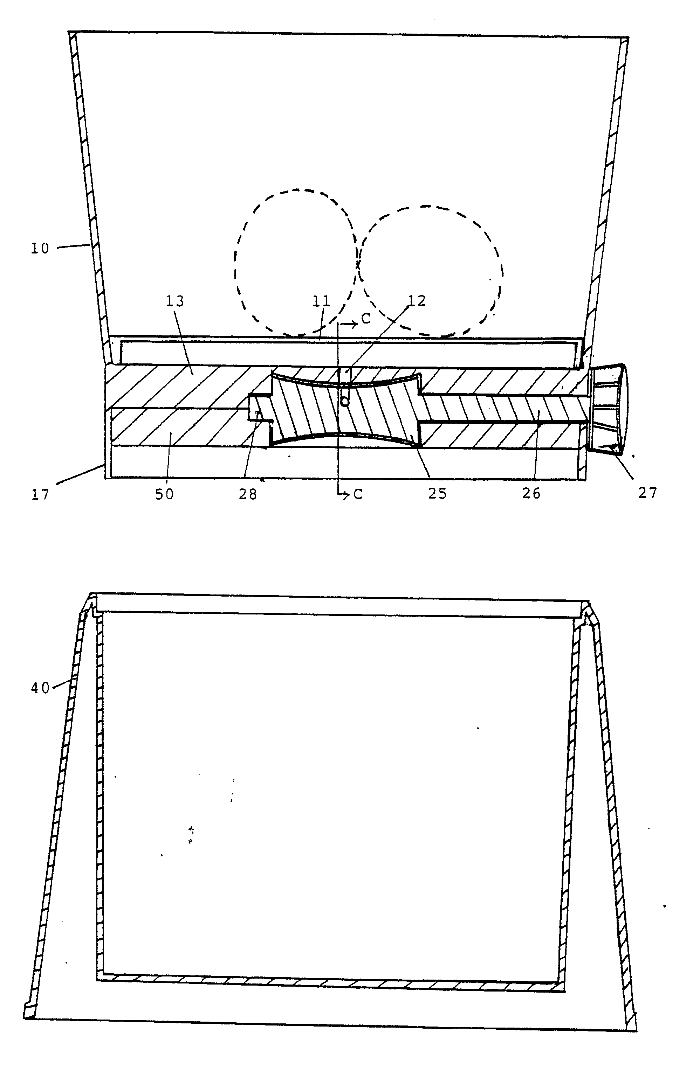

The recessed underside of the circular base 13 of the egg container 10 is best shown in Figures 4 and 5 which illustrates the water outlet hole 12 of pre-determined diameter , e.g. 2 mm, at the center of the base. Beneath the water outlet hole 12, a cavity 16 is formed of semi-circular section which is profiled to cooperate with the longitudinal cavity 54 of the regulator plate 53. These cavities 16 and 54 form a housing cavity in which the valve body 25 is rotatably received. The outer circumferential surface of the valve body 25 is suitably coated with a thin film 60 of polymeric material.

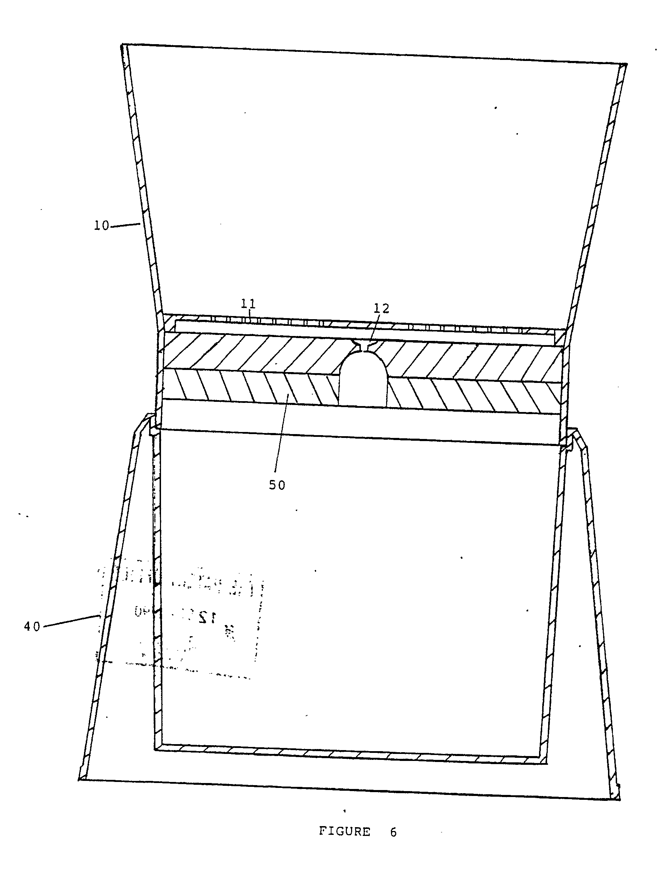

As can be seen in Figures 5 and 6, a receiver container 40 is placed under the egg container 10. Figures 5 and 6 also show a circular grid or grating plate 11 with holes therein which is placed inside the egg container 10 so as to be spaced above the base 13. The plate 11 is intended to support eggs received in the container 10 above the base 13 so as to prevent them obstructing the water outlet hole 12.

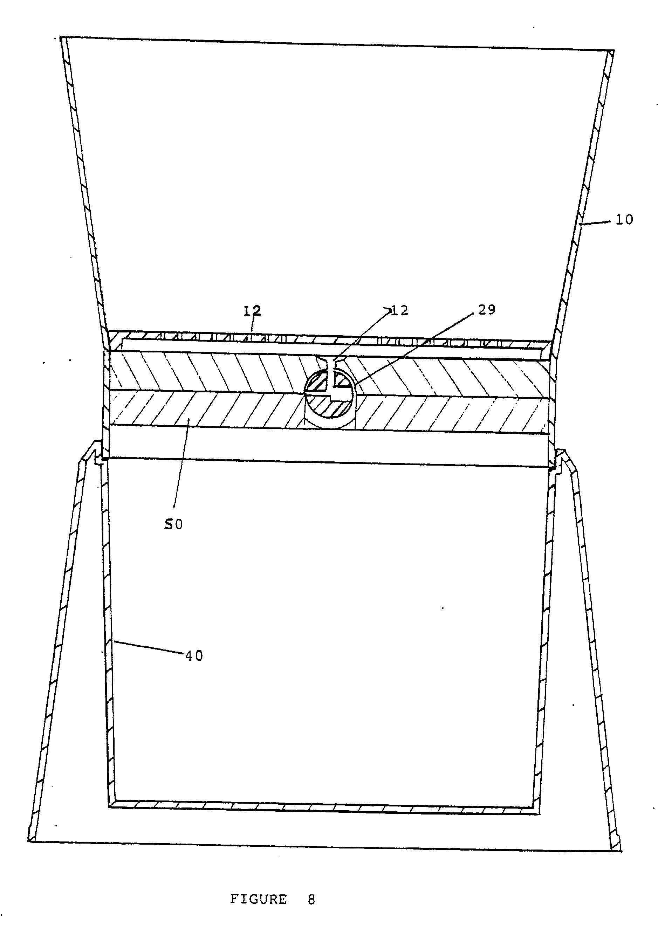

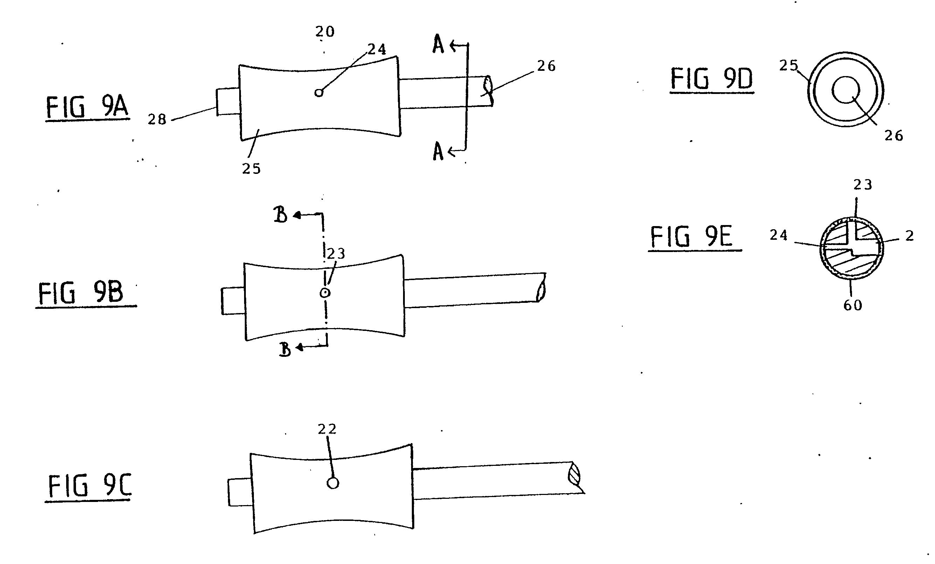

The preferred construction of the valve body 25 and its mounting in the housing cavity are best shown in Figures 8 and 9A-E . In particular, the valve body 25 has three radially directed holes 22-24 provided, e.g. drilled, therein. These holes 22-24 are each of different sizes, e.g. with diameters of 2 mm, 1.5 mm and 1 mm, respectively, and are located at 0, 90 and 180 degrees circumferentially relative to each other. In order to form interconnecting passageways inside the valve body, these holes 22-24 all lie in the same plane and join with each other at the centre of the valve body. At the 270 degree circumferential position, no hole is provided in the valve body. As can be seen in Figure 8, an annular space 29 is left between the walls of the housing cavity and the valve body 25, although the valve body 25 is intended to seal in a water tight manner immediately around the outlet hole 12 where it opens into the cavity 16. When the valve body is turned by turning the knob 27, any one of the three holes 22-24 can be aligned with the central water outlet hole 12. When one of the holes is positioned so as to communicate with the water outlet hole 12, boiling water contained in the egg container will drip through the water outlet hole 12, the selected one of the three holes 22-24, the annular space 29 between the valve body 25 and the housing cavity and finally into the receiver container 40. The three differently sized holes are provided for cooking (or "half-boiling") two, four or six eggs.

When the valve body 25 is turned to its 270 degrees circumferential position beneath the water outlet hole, the latter is blocked so that no water from the egg container can drip or pass therethrough. This position is intended for hard-boiling eggs contained in the egg container 10. The face of the knob 27 is marked accordingly to correlate directly to and indicate the above "half-boiling" or "hard-boiling" situations.

The various component parts of the apparatus are preferably made from a heat resistant plastics, e.g. thermoplastics, material. A material that will rust when in contact with water should preferably not be used.

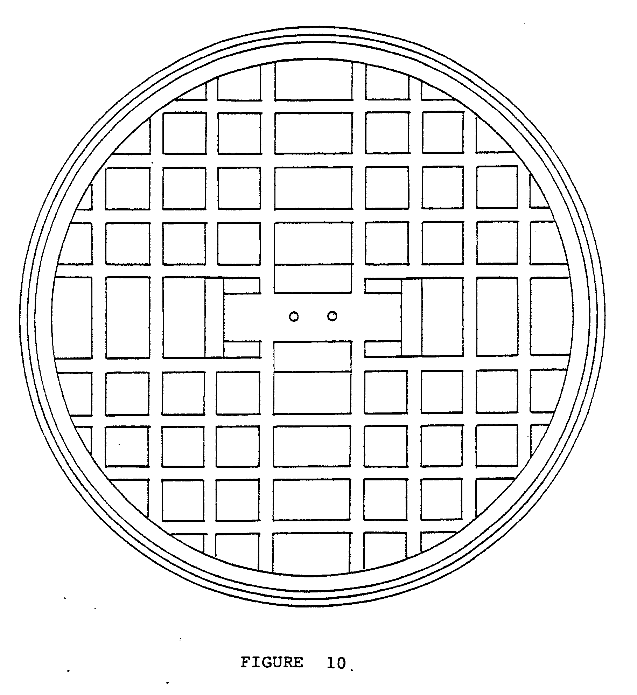

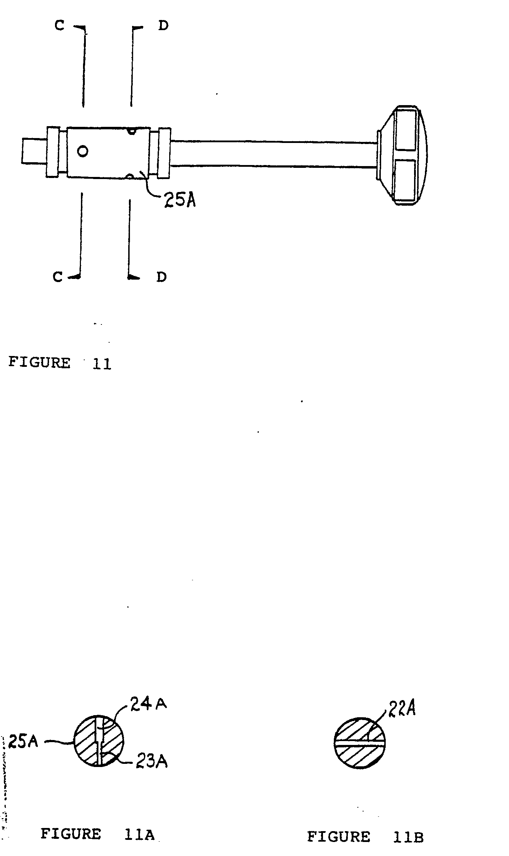

Figures 10 and 11, 11A and 11B illustrate an alternative embodiment of the invention. In contrast to the previous embodiment, the regulator holder is of reduced size in order to save on material costs. In addition a circular grating plate 11A is moulded integrally on top of a base 13A of the egg container 10A. Two water outlet holes 12A are formed in the base 13A adjacent its centre.

In the alternative embodiment, the valve body 25A is of generally circular cylindrical form to facilitate its manufacture. Two sets of differently sized holes are situated in two axially spaced apart radial planes. One of the "sets" of holes comprises a single hole 22A of, for example, 1.5 mm diameter, which is at the 0 degrees circumferential position and extends diametrically right through the valve body to the 180 degrees circumferential position. The other "set" of holes comprises one hole 23A of, for example, 1 mm diameter, which is at the 90 degrees circumferential position and extends half-way approximately through the valve body 25A and another hole 24A, for example of 2 mm diameter, at the 270 degrees circumferential position which extends half-way through the valve body and meets, and communicates with, the hole at the 90 degrees position.

Although it is mentioned throughout the specification that heated liquid, e.g. boiling water, is introduced into the egg container, it will be appreciated that non-boiling, e.g. cold, water could be introduced into the egg container and then heated, e.g. electrically, to the boiled condition within the egg container.

## Claims

1. Apparatus for boiling eggs comprising a container (10) for containing heated liquid, e.g. water, and at least one egg to be boiled, the container having bottom outlet means (12) for draining heated liquid from the container over a period of time, characterised in that the apparatus includes a regulator (20) for controlling the output of heated liquid drained from the container (10) through said bottom outlet means (12).

2. Apparatus according to claim 1, characterised in that said regulator (2) comprises a valve body (25) selectively movable into a number of control positions to control the output of heated liquid through said bottom outlet means (12).

3. Apparatus according ton claim 2, characterised in that said valve body (25) is movable into one control position in which flow of heated liquid through said bottom outlet means (12) is fully blocked.

4. Apparatus according to claim 2 or 3, characterised in that said valve body has different holes formed therein, the valve body being selectively positionable to place different diameter holes beneath said bottom outlet means for different rates of heated liquid output through said bottom outlet means.

5. Apparatus according to claim 4, characterised in that at least some of said holes have diameters of approximately 1 mm, 1.5 mm and 2 mm, respectively.

6. Apparatus according to any of claims 2 to 5, characterised in that said valve body (25) is turnably mounted beneath said bottom outlet means and has associated therewith a turning knob (27) with indicator markings on its surface for positioning the valve body in selected control positions either for half-cooking or half-boiling different numbers of eggs or for hard-boiling eggs.

7. Apparatus according to claim 4 or 5, characterised in that said valve body is turnably mounted beneath the bottom outlet means (12) and in that said holes are situated in the same circumferential plane.

8. Apparatus according to claim 7, characterised in that three of said holes are formed in said valve body at circumferential positions of 0, 90 and 180 degrees relative to each other.

9. Apparatus according to claim 4 or 5, characterised in that the bottom outlet means (12) comprises two water outlet holes and in that the valve body (25A) has at least two axially spaced apart holes selectively postionable beneath the said water outlet holes.

10. Apparatus accccording to any of the preceding claims, characterised in the regulator is movably supported beneath the bottom outlet means (12) by regulator holding means (50).

11. Apparatus according to any of the preceding claims, characterised in that the various components of the apparatus are heat-resistant and non-rusting, for example of polymeric material such as thermoplastics material.

12. A method of boiling at least one egg comprising introducing the egg(s) into a container and draining heated liquid in the container from the bottom of the container over a sufficient period of time to ensure that the or each egg is at least partially cooked or boiled by the time that the heated liquid is completely drained from the container, characterised in that the rate of draining of the heated liquid from the bottom of the container is regulated in dependence on the number of eggs in the container and/or the degree of cooking or boiling required for the egg(s).

13. Apparatus for use with an egg boiling device comprising a container for eggs and heated water provided with water outlet means, characterised in that the apparatus comprises a regulator for controlling outlet of water through said water outlet means and means for mounting the regulator to the heated water container.

FIGURE 1

FIGURE   2

FIGURE 3

FIGURE 4

FIGURE 6

FIGURE 7

FIGURE 8

FIG 9A

20
24
A
26
28
25
A

FIG 9D
25
26

FIG 9B
B
23
B

FIG 9E
23
24
2
60

FIG 9C
22

EP 0 418 050 A1

FIGURE  10

C      D

25A

C      D

FIGURE 11

24A

25A

23A

22A

FIGURE 11A

FIGURE 11B

# EUROPEAN SEARCH
# REPORT

## EP 90 30 9972

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BE-A-4 055 27   (F. DUMONCEAU et al.) <br> * Page 3, lines 14-25; claim 1; figure 1 * <br> − − − | 1,2,3,9, 12,13 | A 47 J 29/02 |
| X | BE-C-5 310 29   (W. EHLERS) <br> * Whole document * <br> − − − | 1,2,3,6, 12,13 | |
| A | | 7,10 | |
| A | DE-C-6 021   (L.M.A. COUCHOUD) <br> − − − − − | | |

TECHNICAL FIELDS
SEARCHED (Int. Cl.5)

A 47 J

The present search report has been drawn up for all claims

| Place of search | Date of completion of search | Examiner |
|---|---|---|
| The Hague | 02 January 91 | MARANGONI G. |